# FASCICULE DE BREVET EUROPEEN

(11) **EP 1 101 181 B1**
(45) Date de publication et mention de la délivrance du brevet: **06.11.2002**
(21) Numéro de dépôt: 99932924.6
(22) Date de dépôt: 20.07.1999
(51) Int. Cl.: G06F 19/00, G06F 15/02

(54) **DISPOSITIF POUR GERER LES TRAITEMENTS VETERINAIRES ET LA REPRODUCTION DES ANIMAUX D'ELEVAGE**
GERÄT ZUM VERWALTEN DER TIERÄRZTLICHEN BEHANDLUNGEN UND DER VERMEHRUNG VON ZUCHTTIEREN
DEVICE FOR MANAGING VETERINARY TREATMENTS AND ANIMAL BREEDING

(30) Priorité: 24.07.1998 FR 9809725
(43) Date de publication de la demande: 23.05.2001
(73) Titulaire: Serieys, Francis, 35650 Le Rheu (FR)
(72) Inventeur: Serieys, Francis, 35650 Le Rheu (FR)
(86) Numéro de dépôt international: FR9901777
(87) Numéro de publication internationale: WO00005672

(56) Documents cités:
- EP-A- 0 005 661
- GB-A- 2 136 999
- GB-A- 2 154 768
- US-A- 4 493 290

## Description

La présente invention concerne un dispositif pour gérer les traitements vétérinaires et la reproduction des animaux d'élevage.

La prévention de la pollution des denrées d'origine animale par des résidus de médicaments vétérinaires est en enjeu essentiel de sécurité alimentaire. La conduite de la reproduction est décisive pour l'organisation du travail et la rentabilité des élevages.

La maîtrise des résidus de médicaments dans les produits nécessite que l'éleveur puisse s'assurer à tout moment qu'il applique correctement les traitements prescrits et qu'il respecte les temps d'attente réglementaires. Elle impose également la tenue par l'éleveur d'un registre des traitements appliqués, à présenter aux tiers chargés de contrôles a posteriori. La maîtrise de la reproduction passe par un ensemble d'enregistrements que l'éleveur doit pouvoir exploiter au jour le jour pour intervenir à bon escient sur chaque animal et a posteriori pour analyser périodiquement la conduite globale du troupeau. Il y a donc pour la gestion des traitements et la gestion de la reproduction, 2 fonctions distinctes bien identifées : d'une part une fonction de guidage opérationnel au jour le jour s'appliquant à l'échelle de l'animal, d'autre part une fonction de bilan et d'analyse différée à l'échelle du troupeau. En outre, dans l'un et l'autre cas, le guidage opérationnel s'applique à un processus faisant intervenir une succession d'événements, interventions et opérations qui s'enchaînent dans un ordre logique et selon des intervalles de temps prédéterminés.

Actuellement, la gestion des traitements vétérinaires et la gestion de la reproduction dans les élevages sont totalement dissociées. La fonction de guidage opérationnel au jour le jour est réalisée par des moyens essentiellement manuels : écriture des informations sur un tableau, un carnet, ou une fiche ; calcul des dates des opérations à venir ; utilisation de plannings. La fonction d'analyse différée est réalisée soit manuellement en reprenant l'ensemble des écritures effectuées pour le guidage opérationnel, mais le travail est alors fastidieux pour un niveau d'analyse qui reste superficiel, soit par informatique mais il faut au préalable saisir l'ensemble des écritures. Finalement, ces dispositions sont peu efficaces de sorte que ces 2 domaines de la conduite d'élevage sont généralement mal gérés.

Pour remédier à ces inconvénients, il faudrait pouvoir remplacer les enregistrements manuels par une saisie informatique unique des événements au moment de leur occurrence, réalisable sans difficulté par l'éleveur dans les conditions de son activité, donnant lieu à une exploitation immédiate à des fins opérationnelles et à une exploitation différée à des fins d'analyse et de bilan.

Un système de calcul des rations alimentaires des vaches laitières comportant un boîtier portable de saisie qui peut permettre d'enregistrer certains événements zootechniques, a été décrit (document US 4493290 A). Toutefois, ce système ne disposant pas des fonctions nécessaires à la détermination des événements à venir et des opérations subséquentes à réaliser, ne peut pas assurer le guidage opérationnel des traitements et de la reproduction.

Le dispositif selon l'invention permet de répondre à ces exigences.

Il est constitué d'un boîtier informatique portable, d'une imprimante, de fiches de suivi rigides, d'un planning linéaire à fiches et d'un modem.

Le boîtier informatique portable, doté d'accumulateurs rechargeables ; d'électricité lui assurant une autonomie de fonctionnement en tout lieu de l'exploitation et de ports de connexion à l'imprimante et au modem, dispose d'un clavier de saisie avec des touches spéciales dédiées à la saisie par l'éleveur d'événements répertoriés tels que initiation d'un traitement vétérinaire, mise bas, manifestation de chaleurs, mise à la reproduction, ainsi que des touches alphanumériques pour saisir notamment leur date et demi-journée d'occurrence, l'identification de l'animal concerné et, s'agissant d'un traitement, la spécialité vétérinaire utilisée.

Il intègre un répertoire des spécialités vétérinaires susceptibles d'être utilisées dans l'élevage contenant les paramètres de leur protocole d'administration et d'attente tels que le nombre d'administrations, la voie d'administration, la dose, les intervalles entre administrations, la durée du temps d'attente et un répertoire des paramètres chronologiques de reproduction dans l'espèce considérée tels que durée du cycle sexuel, durée de gestation, intervalle de la mise bas au début des contrôles d'involution utérine, intervalle de la mise bas au début des inséminations, intervalle de l'insémination au début des examens de confirmation de gestation.

II comporte un microprocesseur élémentaire qui utilise les informations de ces répertoires pour calculer à chaque saisie d'événement répertorié les dates et demi-journées des opérations subséquentes à réaliser tels que fin des administrations et fin du temps d'attente dans le cas d'un traitement ou contrôle d'involution utérine, début de la période d'insémination, surveillance des retours en chaleurs, diagnostic dé gestation et surveillance de mise bas dans le cas d'événements de reproduction.

L'imprimante permet d'imprimer à la suite de la saisie de chaque événement répertorié, les informations opérationnelles saisies ou calculées par le boîtier informatique sur une fiche de suivi réalisée dans une matière rigide et selon un format permettant à l'éleveur de la placer sur le planning linéaire ou encore, selon ses besoins, dans sa poche ou dans une boîte à fiches,

Selon des modes particuliers de réalisation :
- les fiches de suivi ont une forme en T facilitant leur placement sur un planning linéaire à fentes,
- le planning linéaire est constitué de plusieurs panneaux rectangulaires amovibles qui se placent l'un au-dessus de l'autre sur un support vertical, les dates étant placées en lignes et les animaux en colonnes,
- le boîtier informatique est équipé d'un système de lecture optique d'informations pré imprimées,
- le boîtier informatique est équipé d'une horloge interne indiquant la date et la demi-journée courantes,
- le boîtier informatique est équipé d'un écran d'affichage,
- le boîtier informatique est équipé d'un système de navigation à touches permettant de faire défiler, de sélectionner, de mettre à jour ou d'effacer des informations affichées à l'écran,
- la connexion entre le boîtier informatique et le réseau électrique est réalisée par l'intermédiaire d'un support sur lequel on encastre le boîtier pour recharger ses accumulateurs,
- la connexion entre le boîtier informatique et l'imprimante est réalisée par l'intermédiaire d'un support sur lequel on encastre le boîtier pour imprimer les fiches de suivi rigides,
- la connexion entre le boîtier informatique et le modem est réalisée par l'intermédiaire d'un support sur lequel on encastre le boîtier pour assurer les échanges de données avec un ordinateurs distant,
- la transmission des données du boîtier informatique vers l'imprimante, vers le modem et éventuellement vers un ordinateur proche est réalisée par un système d'émission-réception infrarouge.

Les dessins annexés illustrent l'invention adaptée à l'élevage de vaches laitières :
- la figure 1 représente le boîtier informatique en vue de dessus,
- la figure 2 représente une fiche de suivi imprimée suite à la saisie de l'initiation d'un traitement vétérinaire,
- la figure 3 représente une fiche de suivi imprimée suite à la saisie d'une insémination.

En référence à ces dessins, le dispositif comporte un boîtier informatique portable (1) doté d'un clavier de saisie (2) et d'un écran d'affichage (3).

Le clavier est muni de touches spéciales (4) correspondant aux types d'événements répertoriés à saisir : initiation d'un traitement (TRA), vêlage (VEL), chaleurs et insémination (CHA), contrôle de gestation (GES). Lorsque l'opérateur appuie sur l'une de ces touches, un masque de saisie apparaît à l'écran. Ce masque comprend systématiquement la date et la demi-journée d'occurrence de l'événement à saisir (5) ainsi que le numéro de l'animal concerné (6). Cette date et cette demi-journée d'occurrence de l'événement à saisir correspondent généralement à la date et demi-journée courantes (7) indiquées par l'horloge interne du boîtier qui s'affichent spontanément à l'écran ; dans le cas contraire, il faut utiliser le pavé de navigation (8) pour effacer la date et demi-journée courantes puis effectuer la saisie correcte en utilisant les touches numériques (9) et alphabétiques (10).

Les autres données à renseigner sont spécifiques au type d'événement à saisir. Dans le cas de l'initiation d'un traitement, il s'agit de la spécialité utilisée (11) qui est saisie soit en tapant directement sur le clavier le code ou le nom sous lequel elle est enregistrée dans le répertoire des spécialités, soit en utilisant le pavé de navigation (8) et la touche de validation (12) pour la sélectionner dans le répertoire, soit encore grâce au lecteur optique (13) situé à l'avant du boîtier qui peut lire par exemple un code à barres imprimé sur l'emballage du médicament. Son nom s'inscrit alors en clair à l'écran avec éventuellement des informations complémentaires à renseigner, par exemple l'identification du quartier traité dans le cas d'un traitement intra-mammaire.

Les autres informations spécifiques à un type d'événement répertorié sont notamment dans le cas d'un vêlage, son numéro et son code de facilité, dans le cas de chaleurs ou d'une insémination, leur numéro depuis le dernier vêlage, et dans le cas d'un contrôle de gestation, le type de diagnostic pratiqué et son résultat.

La touche AUTRE (14) fait apparaître une liste d'autres types d'événements répertoriés d'importance secondaire ou d'occurrence moins fréquente que les précédents, par exemple diagnostic de métrite ou diagnostic de troubles métaboliques. L'opérateur utilise le pavé de navigation et la touche de validation pour sélectionner le type de l'événement à saisir et faire apparaître le masque de saisie correspondant.

Une fois que toutes les informations demandées pour la saisie d'un événement répertorié sont renseignées, l'opérateur appuie sur la touche de validation (12) qui commande :
- la validation des entrées relatives à l'événement à saisir et leur stockage temporaire dans une mémoire jusqu'à leur transfert sur un ordinateur distant via le modem ou sur un ordinateur proche via une connexion directe,
- le calcul immédiat par le microprocesseur des dates et demi-journées prévues pour la réalisation des opérations subséquentes à l'événement saisi,
- le stockage temporaire dans une mémoire des informations saisies relative à l'événement et des informations calculées relatives aux opérations subséquentes jusqu'à leur impression par l'imprimante sur une fiche de suivi rigide.

Le clavier du boîtier informatique comporte une touche REP (29) qui permet d'accéder au répertoire des spécialités vétérinaires et au répertoire des paramètres de reproduction, notamment pour créer de nouveaux enregistrements, en supprimer, changer leur code d'identification ou modifier la valeur de paramètres. La touche FICHE (30) commande l'impression des fiches de suivi par l'imprimante et la touche MOD (31) le transfert par le modem des informations saisies.

Les plots électriques (32) du boîtier informatique portable sont situés sur sa face inférieure et ses ports de connexion (33, 34) avec l'imprimante et le modem sur sa face arrière, de façon à venir s'ajuster précisément aux pièces homologues d'un support sur lequel on encastre le boîtier pour assurer la recharge de ses accumulateurs d'électricité, imprimer les fiches de suivi ou transférer les informations saisies sur un ordinateur distant.

À titre d'exemple non limitatif, le corps du boîtier aura la forme d'un parallélépipède rectangle à arêtes et coins arrondis, d'environ 20 cm de long, 10 cm de large et 3 cm de haut. Il sera réalisé en métal ou dans une matière plastique très résistante avec une imperméabilisation à la poussière et aux ruissellements.

Les fiches de suivi rigides (15) ont une forme en T et sont réalisées en carton.

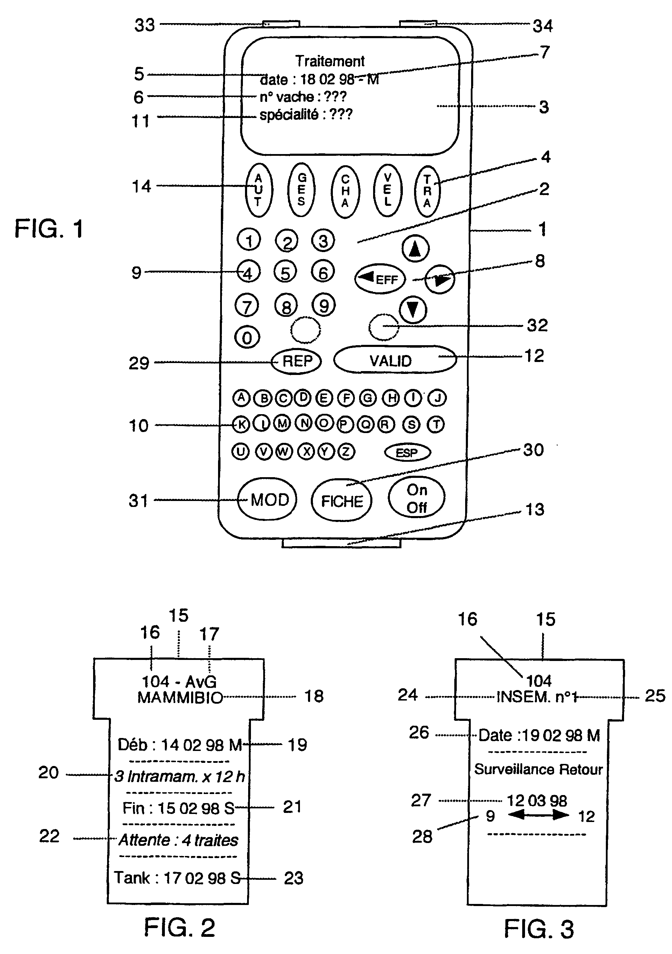

La fiche de suivi de la figure 2 correspond à un traitement avec une spécialité administrée par voie intra-mammaire. Elle comporte les informations suivantes : le numéro de l'animal traité (16) - la position du quartier traité (17) - le nom de la spécialité (18) - la date et demi-journée du début de traitement (19) - le nombre, la voie et l'espacement des injections (20) extraits du répertoire des spécialités - la date et demi-journée de fin des injections (21) égales à la date et demi-journée de début du traitement augmentées du nombre de demi-journées correspondant au nombre et à l'espacement des injections
- le temps d'attente à respecter pour le lait (22) extrait du répertoire des spécialités - la date et la demi-journée de fin du temps d'attente après laquelle le lait de l'animal traité peut être remis dans le tank (23) égale à la date et demi-journée de fin des injections augmentées du nombre de demi-journées correspondant au temps d'attente.

Cette fiche est placée sur un planning à fentes réservé au suivi des traitements. À titre d'exemple, ce planning avec les dates en lignes pourra comporter 2 panneaux amovibles, placés l'un en dessous de l'autre sur un support vertical, comportant chacun 14 lignes de fentes, ce qui permet de couvrir 2 semaines successives en distinguant les demi-journées. À la fin de chaque semaine, le panneau qui était en bas est mis à la place de celui qui était en haut.

La fiche de suivi de la figure 3 fait suite à la saisie d'une insémination. Elle comporte les informations suivantes : le numéro de la vache (16) - le type d'événement de reproduction saisi (24) - le numéro de l'insémination (25) - la date et la demi-journée de l'insémination (26) - la date centrale de la période de surveillance des retours en chaleurs (27) égale à la date de l'insémination augmentée des 21 jours de durée du cycle sexuel des vaches - les dates correspondant à un intervalle de plus ou moins 3 jours (28) autour de la date centrale.

Cette fiche est placée sur un planning à fentes réservé au suivi de la reproduction. À titre d'exemple, ce planning pourra comporter 2 panneaux de 31 lignes de fentes chacun permettant de couvrir 2 mois successifs. À la fin de chaque mois, le panneau qui était en bas est mis à la place de celui qui était en haut.

## Revendications

1. Dispositif pour gérer les traitements vétérinaires et la reproduction des animaux d'élevage comportant un boîtier informatique (1) portable, une imprimante, des fiches de suivi (15) rigides, un planning linéaire à fiches et un modem, **caractérisé en ce que** :
- ledit boîtier informatique comprenant de touches spéciales (4) pour la saisie par l'éleveur d'événements répertoriés relatifs aux traitements vétérinaires et à la reproduction,
- ledit boîtier informatique comprenant des moyens pour intégrer un répertoire de spécialités vétérinaires avec les paramètres de leur protocole d'administration et d'attente, et un répertoire des paramètres chronologiques de la reproduction dans l'espèce considérée,
- ledit boîtier informatique comprenant un microprocesseur élémentaire permettant le calcul de dates,
- ledit microprocesseur élémentaire comprenant des moyens pour le calcul, en réponse à chaque saisie d'événement répertoiré, du jour et de la demi-journée des opérations subséquentes à réaliser conformément à la chronologie imposée par les protocoles de traitement et par la physiologie de reproduction de l'espèce,
- ledite imprimante comprenant des moyens pour imprimer, en réponse à chaque saisie d'événement répertoiré, l'ensemble des informations opérationnelles, saisies ou calculées, relatives à cet événement (16, 17, 18, 19, 20, 21, 24, 25, 26) et aux opérations subséquentes (21, 23, 27, 28) sur une fiche de suivi (15) rigide qui se place sur le planning linéaire,

2. Dispositif selon la revendication 1 **caractérisé en ce que** lesdites fiches de suivi (15) ont une forme en T facilitant leur placement sur un planning linéaire à fentes.

3. Dispositif selon l'une quelconque des revendications précédentes **caractérisé en ce que** le planning linéaire est constitué de plusieurs panneaux rectangulaires amovibles qui se placent l'un au-dessus de l'autre sur un support vertical, les dates étant placées en lignes et les animaux en colonnes.

4. Dispositif selon l'une quelconque des revendications précédentes **caractérisé en ce que** le boîtier informatique (1) comprenant une horloge interne indiquant la date et la demi-journée courantes.

5. Dispositif selon l'une quelconque des revendications précédentes **caractérisé en ce que** ledit boîtier informatique (1) comprenant un système de lecture optique (13) d'informations pré imprimées.

6. Dispositif selon l'une quelconque des revendications précédentes, **caractérisé en ce que** ledit boîtier informatique (1) comprenant un écran d'affichage (3) et d'un système de navigation à touches (8).

7. Dispositif selon l'une quelconque des revendications précédentes comprenant des moyens de connexion entre ledit boîtier informatique (1) et le réseau électrique réalisée; par l'intermédiaire d'un support sur lequel on encastre le boîtier pour recharger ses accumulateurs.

8. Dispositif selon l'une quelconque des revendications précédentes où lesdites moyens de connexion entre le boîtier informatique (1) et l'imprimante comprenant un support sur lequel on encastre le boîtier pour imprimer les fiches de suivi (15).

9. Dispositif selon l'une quelconque des revendications précédentes où lesdites moyens de connexion entre le boîtier informatique (1) et le modem comprenant un support sur lequel on encastre le boîtier pour assurer les échanges de données avec un ordinateur distant.

10. Dispositif selon l'une quelconque des revendications précédentes comprenant des moyens de transmission des données du boîtier informatique vers l'imprimante, le modem et éventuellement vers un ordinateur, proche où lesdites moyens de transmission comprenant des moyens d'émission-réception infrarouge.

## Claims

1. Device to manage the veterinary treatments and the reproduction of farm animals including a portable data processing unit (1), a printer, rigid control cards (15), a linear planning board using cards and a modem **characterized in that**:
- the so-called data processing unit includes special keys (4) for the capture by the farmer of indexed events relative to the veterinary treatments and to the reproduction,
- the so-called data processing unit includes means for integrating a directory of veterinary specialities with the parameters of their administration protocols and withholding times and a directory of the chronological parameters of the reproduction in the species considered,
- the so-called data processing unit includes a basic microprocessor allowing the calculation of dates,
- the so-called basic microprocessor includes means for the calculation, in response to the capture of each indexed event, of the date and the half-day of the subsequent operations to be carried out in compliance with the chronology imposed by the treatment protocols and by the reproduction physiology of the species,
- the so-called printer includes means for printing, in response to the capture of each indexed event, all operational information, entered or calculated, relative to this event (16, 17, 18, 19, 20, 21, 24, 25, 26) and to the subsequent operations (21, 23, 27, 28) on a rigid control card (15) to be placed on the linear planning board.

2. Device according to claim 1 **characterized in that** the so-called control cards (15) are T shaped making them easy to fit into a slot-based linear planning board.

3. Device according to any one of the previous claims **characterized in that** the so-called linear planning board consists of removable rectangular panels that are placed one above another on a vertical support, the dates being placed in lines and the animals in rows.

4. Device according to any one of the previous claims **characterized in that** the so-called data processing unit (1) includes an internal clock indicating the current date and half-day.

5. Device according to any one of the previous claims **characterized in that** the so-called data processing unit (1) includes an optical reading system of pre-printed information (13).

6. Device according to any one of the previous claims **characterized in that** the so-called processing unit (1) includes a display screen (3) and a key-based browsing system (8).

7. Device according to any one of the previous claims including means of connection between the so-called data processing unit (1) and the electric network using a support on which the data processing unit is fitted to recharge its accumulators.

8. Device according to any one of the previous claims including means of connection between the so-called data processing unit (1) and the so-called printer using a support on which the data processing unit is fitted to print the so-called control cards (15).

9. Device according to any one of the previous claims including means of connection between the so-called data processing unit (1) and the so-called modem using a support which the data processing unit is fitted to exchange data with a remote computer.

10. Device according to any one of the previous claims including means of transmission of data between the data processing unit, the printer, the modem and possibly a nearby computer, using infrared waves.

## Patentansprüche

1. Vorrichtung zur Verwaltung der Veterinärbehandlungen und der Reproduktion von Zuchttieren, beinhaltend eine tragbare Informatik-Einheit (1), einen Drucker, starre Begleitkarten (15), einen lineareren Steckkarten-Plan sowie ein Modem, mit folgenden Merkmalen:
- benannte Informatik-Einheit besitzt spezielle Funktionstasten (4) für die Eingabe von aufgelisteten Vorgängen betreffend der Veterinärbehandlung und der Reproduktion, durch den Züchter,
- benannte Informatik-Einheit verfügt über Möglichkeiten ein Verzeichnis der tierärztlichen Medikamente mit den Werten ihrer Verabreichungs- und Aussetzvorschrift und ein chronologisches Verzeichnis der Reproduktionswerte der entsprechenden Art, zu integrieren.
- benannte Informatik-Einheit besitzt einen elementaren Mikroprozessor zum Berechnen der Daten,
- benannter elementarer Mikroprozessor verfügt über die Möglichkeiten der Berechnung als Folge jeder Eingabe eines aufgelisteten Vorgangs, der am Tag und halben Tag, entsprechend der durch die Vorschriften vorgegebenen Chronologie der Behandlung und der Physiologie der Reproduktion der Art, aufeinander folgenden Operationen,
- benannter Drucker ist in der Lage, nach jeder Eingabe eines aufgelisteten Vorgangs die Gesamtheit der eingegebenen oder berechneten operationellen Informationen über diesen Vorgang (16, 17, 18, 19, 20, 21, 24, 25) und der darauf folgenden Operationen (21, 23, 27, 28) auf eine starre Begleitkarte (15), die in den linearen Plan gesteckt wird, zu drucken.

2. Die Vorrichtung gemäß Anforderung 1 ist **dadurch gekennzeichnet, dass** benannte Begleitkarten (15) die Form eines "T" haben, was ihr platzieren auf einem linearen Plan mit Schlitzen erleichtert.

3. Die Vorrichtung gemäß egal welchem der vorangegangenen Anforderungen ist **dadurch gekennzeichnet, dass** benannter lineare Plan sich aus mehreren rechteckigen, abnehmbaren Tafeln, die sich eine über die andere auf einem vertikalen Träger anordnen, zusammensetzt, dabei werden die Daten in Linie und die Tiere in Kolonnen platziert.

4. Die Vorrichtung gemäß egal welchem der vorangegangenen Anforderungen ist **dadurch gekennzeichnet, dass** benannte Informatik-Einheit (1) einen Zeitgeber hat, der das laufende Datum und den halben Tag angibt.

5. Die Vorrichtung gemäß egal welchem der vorangegangenen Anforderungen ist **dadurch gekennzeichnet, dass** benannte Informatik-Einheit (1) über ein System zur optischen Abtastung (13) der vorgedruckten Informationen verfügt.

6. Die Vorrichtung gemäß egal welchem der vorangegangenen Anforderungen ist **dadurch gekennzeichnet, dass** benannte Informatik-Einheit (1) einen Bildschirm (3) und ein SteuerSystem mit Tasten (8) besitzt.

7. Die Vorrichtung gemäß egal welchem der vorangegangenen Anforderungen verfügt über die Anschlussmöglichkeiten zwischen benannter Informatik-Einheit (1) und dem Stromnetz mittels eines Gestells, in das man die Einheit zum Aufladen ihrer Akkus einschiebt.

8. Die Vorrichtung gemäß egal welchem der vorangegangenen Anforderungen verfügt über die Anschlussmöglichkeiten zwischen benannter Informatik-Einheit (1) und benanntem Drucker mittels eines Gestells in das man die Einheit einschiebt, um die benannten Begleitkarten (15) zu drucken.

9. Die Vorrichtung gemäß egal welchem der vorangegangenen Anforderungen verfügt über die Anschlussmöglichkeiten zwischen benannter Informatik-Einheit (1) und benanntem Modem mittels eines Gestells in das man die Einheit einschiebt, um den Datenaustausch mit einem entfernten Rechner zu garantieren.

10. Die Vorrichtung gemäß egal welchem der vorangegangenen Anforderungen besitzt die Möglichkeiten zur Übertragung der Daten von der Informatik-Einheit zum Drucker, zum Modem und eventuell zu einem Rechner in der Nähe durch Infrarot-Datenaustausch.
